# EUROPÄISCHE PATENTSCHRIFT

(11) **EP 0 858 377 B1**
(45) Veröffentlichungstag und Bekanntmachung des Hinweises auf die Patenterteilung: **05.06.2002**
(21) Anmeldenummer: 97940039.7
(22) Anmeldetag: 29.07.1997
(51) Int. Cl.: B23F 19/10, B23F 23/12, F16H 25/12

(54) **WERKZEUGMASCHINE ZUM ABDACHEN VON ZAHNFLANKEN EINES ZAHNRADES**
MACHINE TOOL FOR BEVELLING OF TOOTH FLANKS OF A GEAR
MACHINE-OUTIL POUR ARRONDIR LES FLANCS DE DENTS D'UNE ROUE DENTEE

(30) Priorität: 06.08.1996 DE 19631675
(43) Veröffentlichungstag der Anmeldung: 19.08.1998
(73) Patentinhaber: WERA WERK HERMANN WERNER GmbH & Co. KG, 42349 Wuppertal (DE)
(72) Erfinder: GARSCHAGEN, Friedrich, Albert, D-42855 Remscheid (DE); HEYM, Hans-Udo, D-42327 Wuppertal (DE)
(74) Vertreter: Grundmann, Dirk, Dr.
(86) Internationale Anmeldenummer: EP9704106
(87) Internationale Veröffentlichungsnummer: WO9805460

(56) Entgegenhaltungen:
- DE-A- 3 000 295
- DE-C- 4 134 925
- GB-A- 1 470 028
- US-A- 1 960 536
- US-A- 3 728 902

## Beschreibung

Die Erfindung betrifft eine Werkzeugmaschine zum Abdachen von Zahnflanken eines Zahnrades, wobei gleichzeitig zwei Dachflächen gefräst werden, mit einem drehangetriebenen Werkstückträger und mit zwei in Richtung ihrer Achsen auf das Werkstück zustellbaren, drehangetriebenen Werkzeugspindeln, deren Winkelausrichtung zur Werkstückachse einstellbar ist, zur Aufnahme jeweils eines Fräsers, insbesondere Stirnfräsers oder Einzahnschlagmessers, wobei das Werkstück wahlweise getaktet oder kontinuierlich drehangetrieben ist und die Werkzeugspindeln entsprechend synchron zum Werkstücktakt axial vor- und zurückverlagerbar sind oder synchron zur kontinuierlichen Werkstückdrehung axial festgelegt rotieren, wobei das Werkstück in Achsrichtung vorgeschoben wird und wobei jeder Werkzeugspindel ein Schlitten zugeordnet ist, der von einem Axialverlagerungs-Antrieb verlagerbar ist.

Eine Werkzeugmaschine der in Rede stehenden Art ist bekannt aus der DE 41 34 925 C1, wobei die von einem Schlitten aufgenommenen Werkzeugspindeln mittels eines Oszillators mit sehr schneller Hubfolge von 1.200 oder mehr Hüben pro Minute hin- und herbewegt werden, und zwar in Synchronisation mit der Drehung des Werkstükkes. Überlagernd erfolgt hierzu eine kontinuierliche Zustellung der Werkzeugspindeln in Richtung auf das Werkstück zwecks Erzeugung der Abdachungen. Es erfolgen demgemäß in Richtung der Werkzeugspindelachsen zwei voneinander getrennte Bewegungen, nämlich zum einen die Oszillationsbewegung und zum anderen die eigentliche Vorschubverlagerung, was den Aufbau einer solchen Werkzeugmaschine aufwendiger gestaltet. In dieser Schrift wird ausgeführt, daß das Werkstück auch um jeweils eine Teilung weiterschaltbar ist, wenn ein Stoßfräsbetrieb gewünscht ist, was einem Taktverfahren entspricht. Auch dann würde die Oszillationsbewegung der Werkzeugspindel überlagert sein von dem eigentlichen Werkzeugvorschub.

Dem Gegenstand der Erfindung liegt die Aufgabe zugrunde, eine gattungsgemäße Werkzeugmaschine bei einfachem Aufbau so auszugestalten, daß insbesondere beim Abdachen von Zahnflanken im Taktverfahren kurzfristige Bearbeitungszeiten erzielbar sind und daß das Umrüsten der Werkzeugmaschine bei Änderung des Bearbeitungsverfahrens schnell und leicht zu bewerkstelligen ist.

Dieses technische Problem ist bei einer Werkzeugmaschine mit den Merkmalen des Anspruchs 1 gelöst, wobei darauf abgestellt ist, daß der Werkzeugvorschub beim Zerspanvorgang durch die Gestalt einer vom Axialverlagerungs-Antrieb drehangetriebenen, austauschbaren Axial-Steuerkurve bestimmt ist, deren Hub mindestens der Zerspanstrecke entspricht, wobei die beiden Flanken der Axial-Steuerkurve spielfrei zwischen Tastrollen des Schlittens angeordnet sind.

Zufolge derartiger Ausgestaltung ist eine gattungsgemäße Werkzeugmaschine von einfachem Aufbau geschaffen, die einerseits in bekannter Weise das Herstellen von Abdachungen an Zahnflanken im Rotationsverfahren gestattet. Dann tritt der Axialverlagerungs-Antrieb nicht in Wirkung, so daß Werkzeugspindel und Werkstück synchron umlaufen, wobei die Werkstückspindel den Vorschub ausführt. Ist das Abdachen von Zahnflanken eines Zahnrades im Taktverfahren erwünscht, so führt beim Zerspanungsvorgang das Werkzeug bzw. die Werkzeugspindel die Vorschubbewegung aus. Dies geschieht über den Axialverlagerungs-Antrieb, wobei dessen drehangetriebene, leicht und schnell austauschbare Axial-Steuerkurve den Werkzeugvorschub beim Zerspanvorgang bestimmt. Überlagernd ist keine weitere Vorschubbewegung wie beim Stand der Technik auszuführen. Liegt zum Beispiel der von der Axial-Steuerkurve verursachte Hub bei ca. 5 mm, so kann bei der Erzeugung von Abdachungen mit ca. 240 Hüben pro Minute gearbeitet werden, also ein Wert, der bei hydraulisch hin- und herbewegten Werkzeugspindel-Trägern nicht erzielbar ist. Diese hohe Hubfolge bringt daher beim Taktverfahren kürzeste Bearbeitungszeiten verbunden mit genauen Bearbeitungsergebnissen. Die spielfrei zwischen den Tastrollen des Schlittens angeordneten Flanken der Axial-Steuerkurve führen zu einer optimalen Zustellung und Abstellung des von der Werkzeugspindel getragenen Werkzeuges. Die Austauschbarkeit der Axial-Steuerkurve erlaubt sodann eine Anpassung an die Werkstückbeschaffenheit. Diese Austauschbarkeit erweist sich von Vorteil, wenn die Werkzeugmaschine auf rotative Bearbeitung umgestellt werden soll. Es kann daher die Axial-Steuerkurve abgenommen und der Schlitten in seiner vor- oder zurückverlagerten Stellung mittels eines Formkeiles gegen Axialverlagerung gefesselt werden. Das Umstellen auf taktende Bearbeitungsweise erfordert dann das Entnehmen des Formkeiles und Einsetzen einer entsprechenden Axial-Steuerkurve. Die Drehantriebsmotoren für die Werkzeugspindeln können koaxial zu diesen vorgesehen und beispielsweise über eine Keilwellenkupplung verbunden werden. Ferner sind die die Steuerkurven ausbildenden Flanken so gestaltet, daß die Werkzeugspindeln schneller zurückverlagert als vorgeschoben werden.

Nachstehend wird ein Ausführungsbeispiel der Erfindung anhand der Zeichnungen erläutert. Es zeigt:
- Fig. 1: in vereinfachter schematischer Darstellung die Werkzeugmaschine im Bereich der Werkstückspindel und den Werkzeugspindeln,
- Fig. 2: eine Draufsicht auf Fig. 1,
- Fig. 3: einen Ausschnitt eines Zahnrades, bei welchem mittels der Werkzeuge Abdachungen an den Zahnflanken erzeugt werden,
- Fig. 4: in perspektivischer Darstellung einen Ausschnitt des Werkstückes mit fertigen Abdachungen,
- Fig. 5: in Detaildarstellung die Werkzeugspindel mit Schlitten in vom Axialverlagerungs-Antrieb rückverlagerter Stellung,
- Fig. 6: eine Darstellung wie Fig. 5, jedoch bei vorverlagerter Werkzeugspindel,
- Fig. 7: eine Darstellung wie Fig. 5, wobei in der rückverlagerten Stellung der Werkzeugspindel der Schlitten mittels eines Formkeiles gegen Axialverlagerung gefesselt ist,
- Fig. 8: eine Stirnansicht der Axial-Steuerkurve unter Veranschaulichung der einzelnen Kurvenabschnitte, und
- Fig. 9: eine Abwicklung der Steuerkurve.

Die Werkzeugmaschine besitzt eine von einem nicht veranschaulichten Antrieb in Drehung versetzbare Werkstückspindel 1 mit einem Spannfutter 2 zum Festspannen eines als Zahnrad gestalteten Werkstückes 3. Die Werkstückspindel 1 ist horizontal ausgerichtet.

Ferner weist die Werkzeugmaschine einen vertikalen Ständer 4 mit vertikalen Führungen 5 für zwei übereinander angeordnete Werkzeugsupporte 6 und 7 auf. Zu deren Höhenverstellung dienen vertikal ausgerichtete Gewindespindeln 8, 9. Vorzugsweise ist eine solche Maßnahme getroffen, daß die Werkzeugsupporte 6, 7 unabhängig voneinander verstellt werden können.

Jeder Werkzeugsupport 6, 7 nimmt je ein Spindelgehäuse 10 auf, welches mit einer Bogenführung 11 des Werkzeugsupportes 6, 7 zusammenwirkt. In dem Spindelgehäuse 10 ist axial verschieblich ein Schlitten 12 geführt, welcher seinerseits eine drehangetriebene Werkzeugspindel 13 aufnimmt. Mittels eines Antriebsmotors 14 ist die ein Schlagmesser S tragende Werkzeugspindel 13 in Rotation versetzbar. Die Antriebsverbindung zwischen Werkzeugspindel 13 und Antriebsmotor erfolgt dabei vorzugsweise über eine.nicht veranschaulichte Keilwellenkupplung.

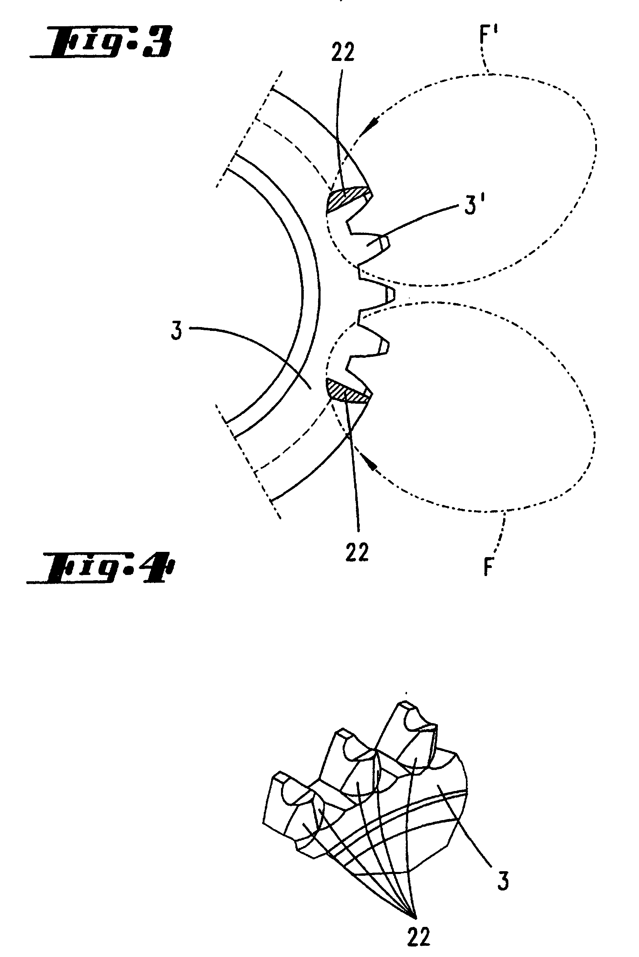

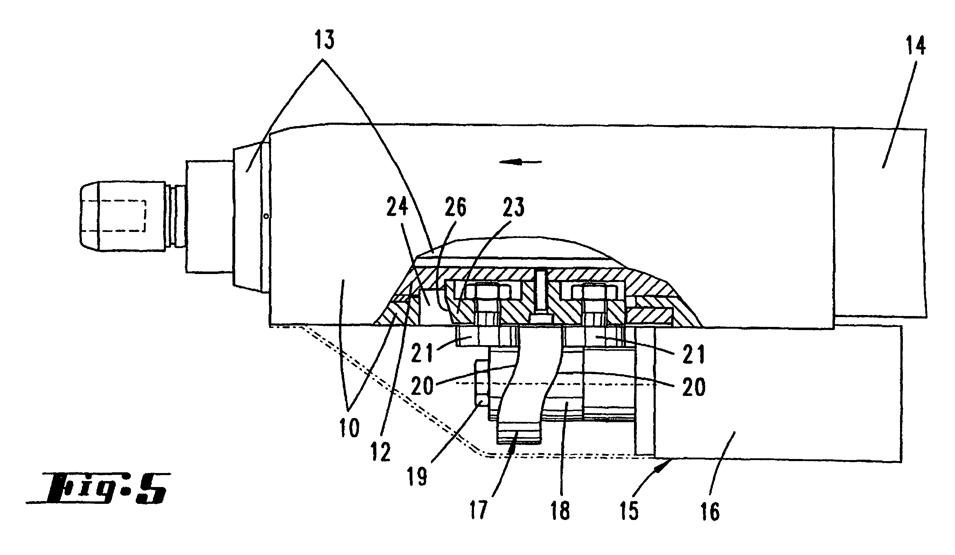

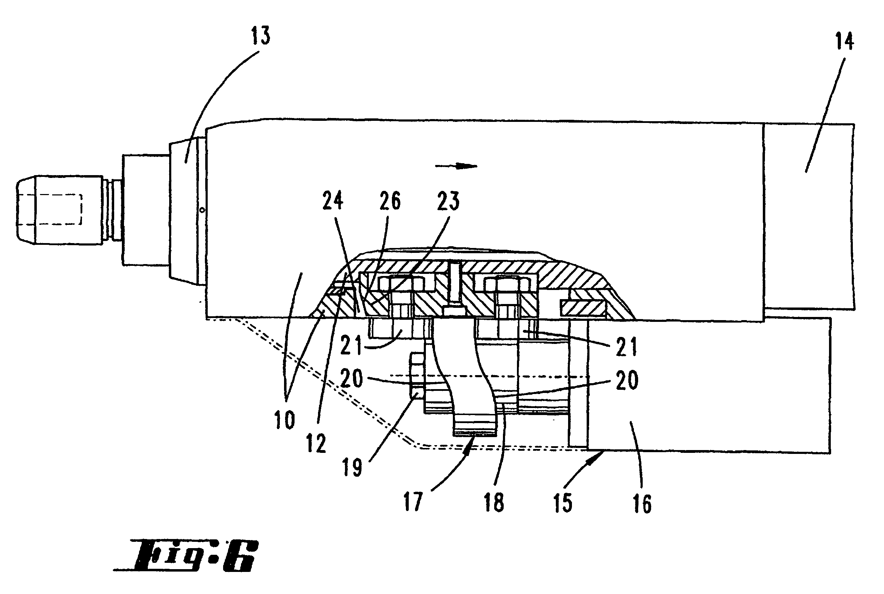

An dem Spindelgehäuse 10 ist ferner ein Axialverlagerungs-Antrieb 15 festgelegt. Dessen Motor 16 dient zum Antrieb einer Axial-Steuerkurve 17. Im einzelnen besitzt diese eine hülsenförmige Nabe 18, welche Träger der Axial-Steuerkurve 17 ist. Im Wege eines Aufsteckens ist mittels einer Spannschraube 19 die Axial-Steuerkurve fesselbar derart, daß eine drehfest Verbindung zwischen der Welle des Motors 16 und der Steuerkurve 17 vorliegt. Die Flanken 20 der Axial-Steuerkurve sind spielfrei zwischen zwei Tastrollen 21 des Schlittens 12 angeordnet, so daß eine Drehverlagerung der Axial-Steuerkurve 17 zu einer Hin- und Herbewegung des Schlittens 12 und damit der Werkzeugspindel 13 führt. Gemäß Fig. 5 befindet sich die Axial-Steuerkurve 17 in einer solchen Stellung, in welcher die zurückverlagerte Stellung des Schlittens 12 vorliegt.

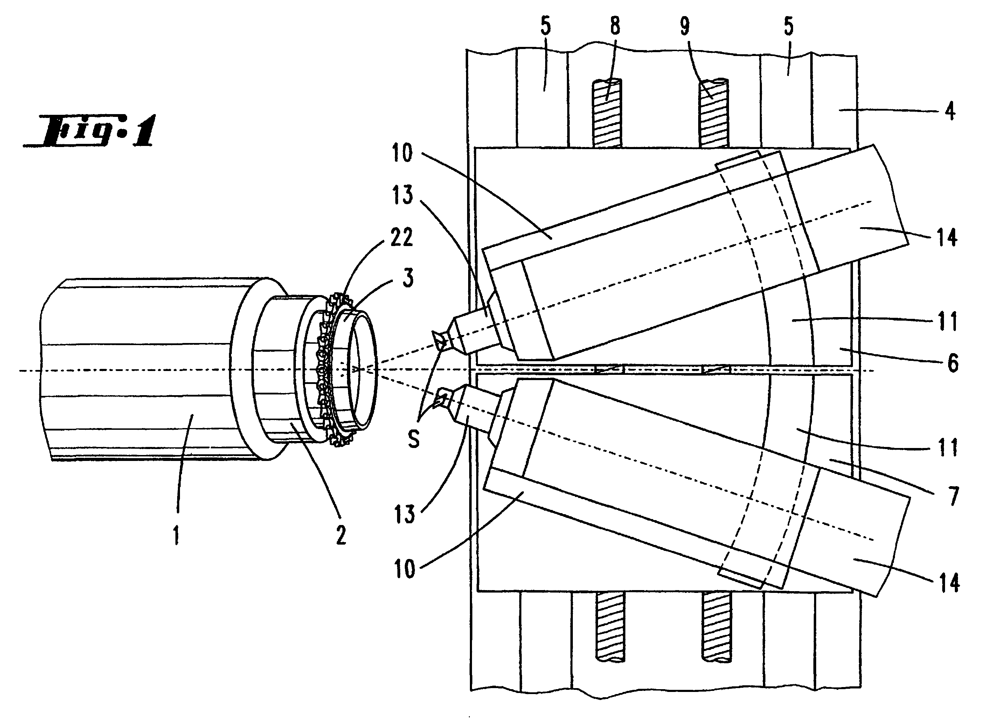

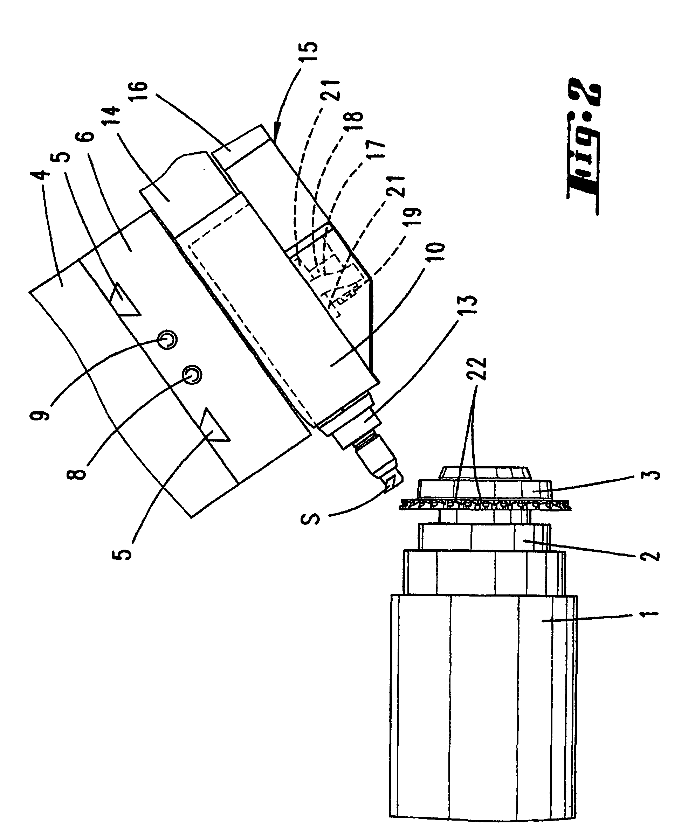

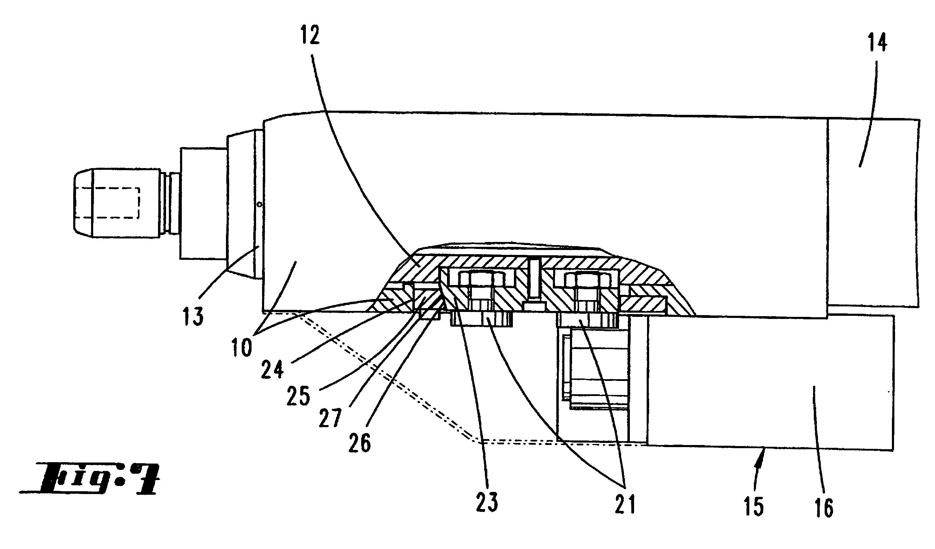

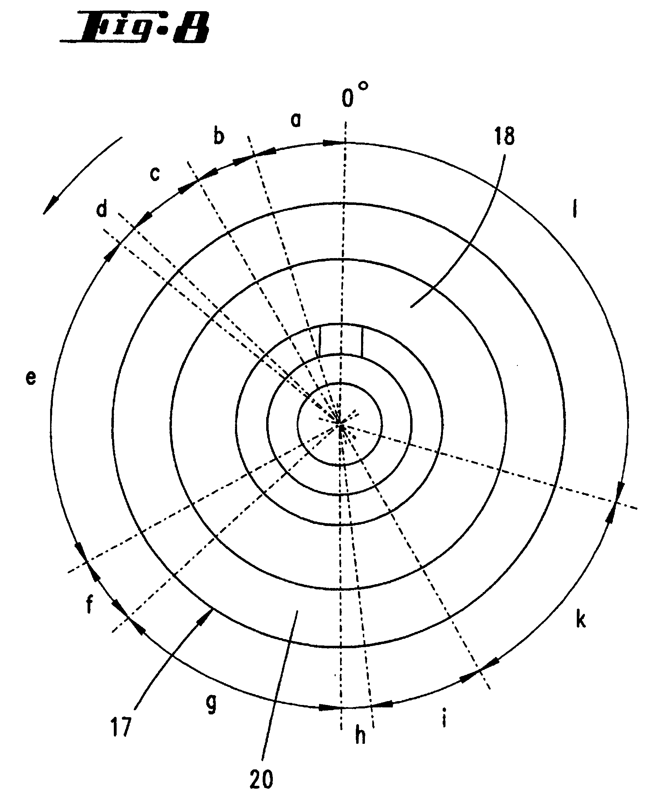

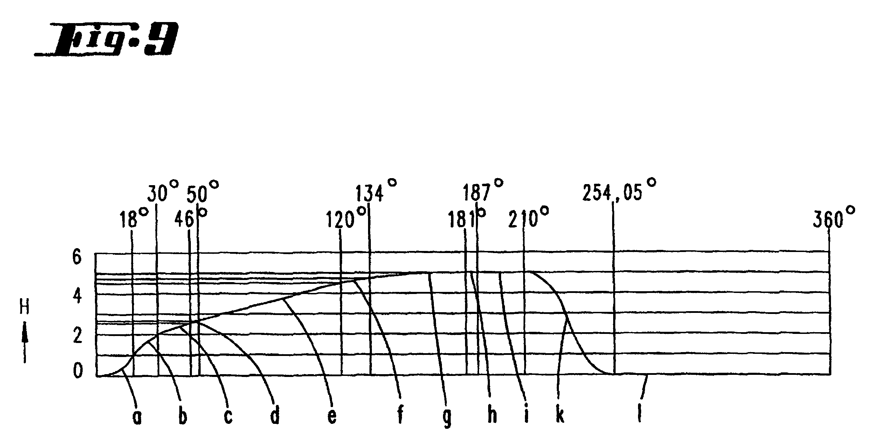

Die Tastrollen 21 liegen bei 0° an den Flanken 20 der Axial-Steuerkurve 17 an. Insbesondere aus der Abwicklung des Flankenverlaufs aus Fig. 9 und Gradeinteilung gemäß Fig. 8 ergibt sich der unterschiedliche Vorlauf der aneinander anschließenden Kurvenabschnitte a-1. Ausgehend von 0° ergibt sich ein langsam ansteigender Verlauf der Flanken 20, welcher Bereich von 180-210° auf gleicher Höhe verbleibt. Dies entspricht beim Ausführungsbeispiel einem Werkzeugvorschub H beim Zerspanvorgang von etwa 5 mm. Im Bereich von 180-210° findet die Feinbearbeitung statt, also ohne Vorschub. Anschließend fällt der Flankenverlauf zwischen 210° und 254,05° steil ab. Hieraus ist ersichtlich, daß beim Zerspanen im Taktverfahren der Werkzeugvorschub relativ groß bemessen ist im Verhältnis zur Rückverlagerung der Werkzeugspindel 13. Beim Arbeiten im Taktverfahren besteht eine Synchronisation zwischen dem taktweisen Antrieb des Werkstückes und dem Motor 16 des Axialverlagerungs-Antriebes. Während eines solchen taktweisen Bearbeitens können durch den Axialverlagerungs-Antrieb 15 pro Minute bis zu 240 Hübe erzeugt werden, so daß kurzfristig Abdachungen 22 an den Zahnflanken eines Zahnrades erzeugt werden können. Dabei bewegen sich die Schlagmesser S auf einer in Fig. 3 angedeuteten Flugbahn F, F' derart, daß mittels des Schlagmessers S je eine Dachflanke an einem Zahn erzeugt wird.

Ist eine rotative Betriebsweise der Werkzeugmaschine erwünscht, also ein synchroner Umlauf von Werkstück 3 und Werkzeugspindel 13, so ist die Steuerkurve 17 nach Lösen der Spannschraube 19 abzunehmen. Dies geschieht in der zurückverlagerten Stellung des Schlittens 12. Dann ist zwischen dem die Tastrollen 21 tragenden Kupplungsstück 23 und dem zum Spindelgehäuse 10 verbleibenden Freiraum 24 ein Formkeil 25 einzusetzen und zu verspannen unter Fesselung des Schlittens 12 in seiner rückverlagerten Stellung. Zu diesen Zweck besitzt das Kupplungsstück 23 eine dem Freiraum 24 zugekehrte, schräg verlaufende Flanke 26, welche mit der zugekehrten Keilfläche 27 des Formkeils 25 zusammenwirkt.

Beim Ausführungsbeispiel ist dargestellt, daß die Steuerkurve 17 der Werkzeugspindel 13 einen Hub von ca. 5 mm vermittelt. Es können jedoch auch Steuerkurven eingesetzt werden, die dem Schlitten bzw. der Werkzeugspindel einen geringeren bzw. größeren Hub aufzwingen.

Alle offenbarten Merkmale sind erfindungswesentlich.

## Patentansprüche

1. Werkzeugmaschine zum Abdachen von Zahnflanken eines Zahnrades (3), wobei gleichzeitig zwei Dachflächen (22) gefräst werden, mit einem drehangetriebenen Werkstückträger und mit zwei in Richtung ihrer Achsen auf das Werkstück zustellbaren, drehangetriebenen Werkzeugspindeln, deren Winkelausrichtung zur Werkstückachse einstellbar ist, zur Aufnahme jeweils eines Fräsers, insbesondere Stirnfräsers oder Einzahnschlagmessers (5), wobei das Werkstück wahlweise getaktet oder kontinuierlich drehangetrieben ist und die Werkzeugspindeln (13) entsprechend synchron zum Werkstücktakt axial vor- und zurückverlagerbar sind oder synchron zur kontinuierlichen Werkstückdrehung axial festgelegt rotieren, wobei das Werkstück in seiner Achsrichtung vorgeschoben wird und wobei jeder Werkzeugspindel ein Schlitten (12) zugeordnet ist, der von einem Axialverlagerungs-Antrieb verlagerbar ist, **dadurch gekennzeichnet, daß** der Werkzeugvorschub beim Zerspanvorgang durch die Gestalt einer vom Axialverlagerungs-Antrieb (15) drehangetriebenen, austauschbaren Axial-Steuerkurve (17) bestimmt ist, deren Hub (H) mindestens der Zerspanstrecke entspricht, wobei die beiden Flanken (20) der Axial-Steuerkurve (17) spielfrei zwischen Tastrollen (21) des Schlittens (12) angeordnet sind.

2. Werkzeugmaschine nach Anspruch 1, **dadurch gekennzeichnet, daß** der Schlitten (12) in seiner vor- oder zurückverlagerten Stellung mittels eines Formkeils (25) gegen Axialverlagerung fesselbar ist.

3. Werkzeugmaschine nach einem oder mehreren der vorhergehenden Ansprüche, **dadurch gekennzeichnet, daß** die Steuerkurve (17) des Axialverlagerungs-Antriebes (15) mit gleichbleibender, zum Werkstücktakt synchronisierter Drehzahl dreht und der Vorschub durch die Steuerkurve (17) definiert ist.

4. Werkzeugmaschine nach einem der vorhergehenden Ansprüche, **dadurch gekennzeichnet, daß** die Werkzeugspindeln (13) schneller zurückverlagert als vorgeschoben werden.

## Claims

1. Machine tool for bevelling the tooth flanks of a gear wheel (3), wherein two roof-like surfaces (22) are milled simultaneously, having a rotationally driven workpiece holder and having two rotationally driven tool spindles advanceable to the workpiece in the direction of their axes whose angular orientation to the workpiece axis is adjustable, each accommodating a milling cutter, in particular a face cutter or single-tooth fly cutter (5), wherein the workpiece is optionally cycled or continuously rotationally driven and the tool spindles (13) are axially displaceable forwards and backwards correspondingly synchronous with the workpiece cycle or rotate in axially fixed manner synchronous with the continuous workpiece rotation, wherein the workpiece is advanced forward in its axial direction and wherein assigned to each tool spindle is a carriage (12) which is displaceable by an axial displacement drive, **characterized in that** the tool advancement during the operation to remove material is determined by the shape of an interchangeable axial control cam (17) rotationally driven by the axial displacement drive (15) whose travel (H) corresponds at least to the machining distance, wherein the two flanks (20) of the axial control cam (17) are arranged without play between jockey rollers (21) of the carriage (12).

2. Machine cool according to Claim 1, **characterized in that** the carriage (12) is restrainable against axial displacement in its advanced or retracted position by means of a moulded wedge (25).

3. Machine tool according to one or more of the preceding claims, **characterized in that** the control cam (17) of the axial displacement drive (15) turns at a constant speed synchronised with the workpiece cycle and the advancement is defined by the control cam (17).

4. Machine tool according to one of the preceding claims, **characterized in that** the tool spindles (13) are displaced backwards more rapidly than advanced.

## Revendications

1. Machine-outil pour arrondir en toit les flancs de dents d'une roue dentée (3), dans laquelle deux surfaces (22) arrondies en toit sont fraisées simultanément, la machine étant munie d'un porte-outil entraîné en rotation et de deux broches d'outil entraînées en rotation et réglables dans la direction de leurs axes pour s'appliquer sur la pièce à usiner, leur orientation angulaire par rapport à l'axe de la pièce à usiner étant réglable, et ces broches étant chacune destinées à recevoir une fraise, en particulier une fraise en bout ou un couteau-frappeur (5) à une seule dent, la pièce à usiner étant entraînée en rotation, au choix pas à pas ou en continu, et les broches d'outil (13) étant susceptibles d'être déplacées axialement en avant et en arrière de façon correspondante et en synchronisme avec le déplacement régulier de la pièce à usiner, ou bien les broches d'outil (13) tournant en étant fixées axialement et en synchronisme par rapport à la rotation continue de la pièce à usiner, l'avance de la pièce à usiner étant réalisée dans sa direction axiale et un chariot (12) étant associé à chaque broche d'outil et étant susceptible d'être déplacé par un entraînement à déplacement axial, **caractérisé en ce que** l'avance de l'outil, au cours du processus d'usinage par enlèvement de copeaux, est déterminée par la conformation d'une came axiale de commande (17), interchangeable, entraînée en rotation par l'entraînement (15) en déplacement axial, came dont le débattement (H) correspond au moins à la course d'usinage par enlèvement de copeaux, et **en ce que** les deux flancs (20) de la came axiale de commande (17) sont disposés sans jeu entre des rouleaux palpeurs (21) du chariot (12).

2. Machine-outil selon la revendication 1 ou en particulier en conformité, **caractérisée en ce que** le chariot (12) est susceptible d'être bloqué dans sa position déplacée en avant ou en arrière, à l'encontre de son déplacement axial, à l'aide d'une cale de forme (25).

3. Machine-outil selon l'une ou plusieurs des revendications précédentes, ou en particulier en conformité, **caractérisée en ce que** la came de commande (17) de l'entraînement (15) en déplacement axial, tourne sensiblement à une vitesse de rotation constante et synchronisée avec la rotation de la pièce à usiner, et **en ce que** l'avance de l'outil est définie par la came de commande (17).

4. Machine-outil selon l'une ou plusieurs des revendications précédentes, ou en particulier en conformité, **caractérisée en ce que** les broches à outil (13) sont plus rapides en retrait qu'en avance.
